# EUROPEAN PATENT SPECIFICATION

(11) **EP 3 298 268 B1**
(45) Date of publication and mention of the grant of the patent: **21.08.2019**
(21) Application number: 16724843.4
(22) Date of filing: 17.05.2016
(51) Int. Cl.: F03D 1/06, F03D 13/10

(54) **BLADE ROOT INSERT AND METHOD OF MANUFACTURE**
ROTORBLATTFUSSEINSATZ UND VERFAHREN ZUR HERSTELLUNG
GARNITURE DE BASE DE PALE ET SON PROCÉDÉ DE FABRICATION

(30) Priority: 18.05.2015 DK 201570288
(43) Date of publication of application: 28.03.2018
(73) Proprietor: Vestas Wind Systems A/S, 8200 Aarhus N (DK); AVK Tooling A/S, 9300 Sæby (DK)
(72) Inventor: LUND, Lars, 7500 Holstebro (DK); JENSEN, Anders, 9300 Sæby (DK)
(74) Representative: Vestas Patents Department
(86) International application number: PCT/DK2016/050130
(87) International publication number: WO 2016/184469

(56) References cited:
- EP-A1- 1 486 415
- EP-A1- 2 589 796
- EP-A1- 2 668 314

## Description

### Background of the Invention

The present invention is directed to a wind turbine blade root insert which has improved corrosion resistance properties, to a blade having such inserts, and to a method of manufacturing such an insert.

In a utility scale wind turbine the blades are conventionally connected to the hub by a bolted connection. The hub carries a bearing structure which allows the blade to rotate or pitch to a limited degree about its longitudinal axis, including a bearing ring which is rotatable relative to the fixed part of the bearing which is fixed to the hub. This bearing ring is formed with spaced openings for receiving the connecting bolts. The root end of the blade is provided with a series of longitudinally-extending metal inserts sunk into the root end face, spaced evenly around the root end each having an internal screw thread. When the blade is connected to the hub, bolts are passed through the openings in the bearing ring, the bolt ends being screwed into the inserts to make a rigid releasable connection of blade to hub. A large number of inserts are provided such that the high loading to which the blade root is subjected is spread over a large number of bolt connections.

The inserts, sometimes referred to as "carrots" due to their shape, are largely embedded in the blade, being fitted into drilled openings in blade root and secured therein by adhesive. Only the end faces of the inserts are exposed at the blade root end face. The inserts are typically formed of mild steel, given the need for high strength. However, the environment in which a wind turbine operates may be harsh, being exposed to weather - rain and in offshore environment salt, over the turbine lifetime, which may be 20 to 25 years. Despite measures to reduce the effects of the environment, such as use of oils over exposed metal areas, and use of protective tapes over inserts prior to blade mounting, a degree of corrosion almost inevitably occurs. This arises predominantly at the insert end face but also to a degree along the bondline between insert and blade. Over a long period such corrosion has the potential to reduce the strength of the connection.

Applicant's EP2668314 discloses a blade insert having at its exposed end a ring formed of a material such as zinc which functions as a sacrificial anode.

The present invention is directed to providing an insert structure which exhibits improved corrosion properties.

### Summary of the Invention

According to a first aspect of the invention there is provided a blade insert for a wind turbine blade root attachment for receiving a bolt within an internal thread of the insert, the insert comprising an elongate body formed of a first material, having joined thereto an annular end portion formed of a second material which has higher corrosion resistance than said first material, the second material being stainless steel.

The first material may be a mild steel, chosen for its good mechanical properties and low cost.

The insert is arranged such that the threaded portion is formed only in the first portion, whilst the end portion forms an annular collar without internal thread through which, in use, the blade bolt extends. In this way, as a bolt is fitted in the insert and tightened as the blade is secure to the bearing, the end portion and joint is maintained in compression.

In a further aspect the invention resides in a wind turbine blade formed with a plurality of such inserts.

In a still further aspect the invention resides in a method of forming a root insert for a wind turbine blade as described above, comprising providing a first stock part of a first material for forming a main body of the insert; providing a second stock part of a second material which has higher corrosion resistance than the first material, this second material being stainless steel, for forming an end portion of the insert; rotation welding the stock parts together; machining the exterior to remove excess material; and drilling and machining the interior to form a longitudinal opening having an internal thread.

### Brief Description of the Drawings

Embodiments of the invention are now described, by way of example only, with reference to the following drawings in which:
Figure 1 is an end view of the root end of a wind turbine blade showing blade root inserts;
Figure 2 is a sectional view of a part of a hybrid blade root insert according to an embodiment of the invention;
Figure 3(a) shows the first step of forming a hybrid insert by friction welding components of the insert together; and
Figure 3(b) shows the formation of the hybrid insert from the stock.

### Detailed Description of the Preferred Embodiment

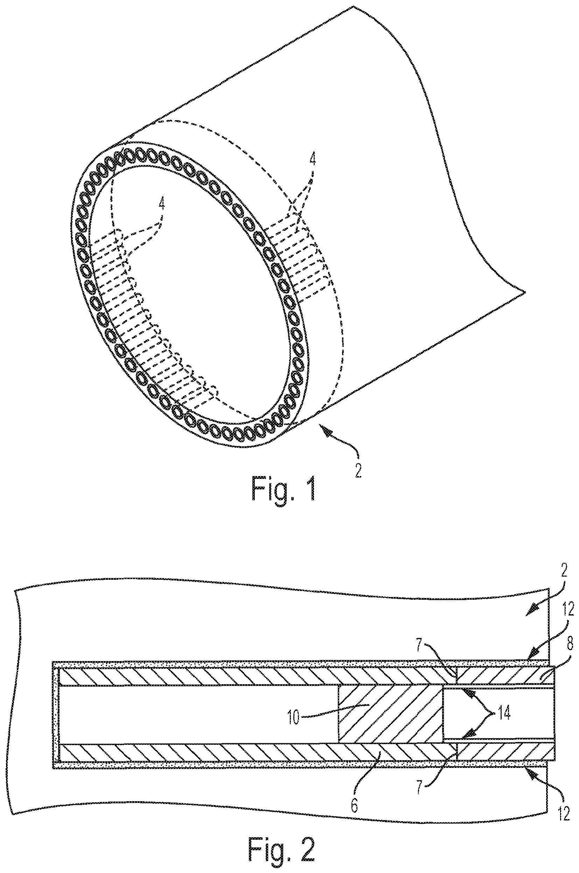

In a utility scale wind turbine the blade is connected to the hub through a bolted connection comprising a large number of bolts which pass through respective openings in a movable ring of a blade bearing on the hub into respective connections in the blade root. As shown in Figure 1 in a conventional wind turbine blade which is typically made of a reinforced fibre composite such as glass and/or carbon fibre in a resin matrix, the blade root end 2 is provided with a plurality of inserts 4 fitted into openings drilled into the blade root end and bonded therein. These are equidistantly spaced round the blade root end and each extend longitudinally within the blade (Figure 1 showing the positions of only a few of the inserts, by dotted lines). These inserts 4 each carry an internal thread into which respective bolts from the blade bearing are tightened. Ends of these inserts 4 are exposed at the blade root end face, from which they extend by a small distance typically less than 5mm. Alternatively, it is also known to employ composite pre-forms in the root end which are layed up with the blade materials before curing. The openings may be drilled into these pre-forms. This may be done after moulding of the blade or alternatively the openings may be pre-drilled in the pre-forms before these are inserted into the layup.

In accordance with the invention, as shown in Figure 2, the inserts 4 are formed as hybrid inserts formed of a main body part 6 of a relatively lower grade steel and an end portion 8 of steel having a higher corrosion resistance. In the preferred embodiment the main part 6 is formed of mild steel as is conventional, but joined at joint 7 to an end portion 8 of a stainless steel, noting that an exposed end face of the insert is at the right hand side of the figure. By mild steel is meant low carbon steel having a low carbon content of about 0.05 to 0.3% by weight carbon, more typically 0.1 to 0.25% carbon. By stainless steel is meant steel having a high chromium content, typically at least 13% potentially up to 25%, and which may be austenitic, ferritic or martensitic depending on carbon content and the presence and content of other alloy elements.

The end portion 8 is tubular and preferably has an inner surface that is devoid of internal thread, the internal thread indicated 10 being formed only in the main mild steel body portion 6, whereby the stainless steel portion 8 and joint 7 between main body portion 6 and stainless steel end portion 8 is not directly subjected to loading, notably the torsional loading, from the blade bolts. Indeed, as the joint 7 is arranged towards the outer side of the insert with bolt connection into the thread 10, as a bolt is inserted and tightened, the bearing bears against the insert such that the steel portion 8 and joint is placed in compression. As is usual the insert may be bonded into the opening in the blade root end face by means of an adhesive, whilst other treatments may further improve the adhesion of the insert.

In this manner the part of the insert 4 which is exposed at the blade root end face is formed of a material having high corrosion resistance. Moreover, a significant length of insert 4 potentially susceptible to corrosion at the external bondline with the blade root, indicated 12 in Figure 2, is also thereby of high corrosion resistance. In use in order to further improve corrosion resistance of the end portion of the insert an oil film may be applied at the exposed interior, as indicated at 14. The length of the stainless portion 8 may be relatively short for example 20-60 mm depending on the length of the insert, or as little as 10 mm. It is important that the length of stainless steel portion 8 exceeds the distance by which the insert protrudes from the root end.

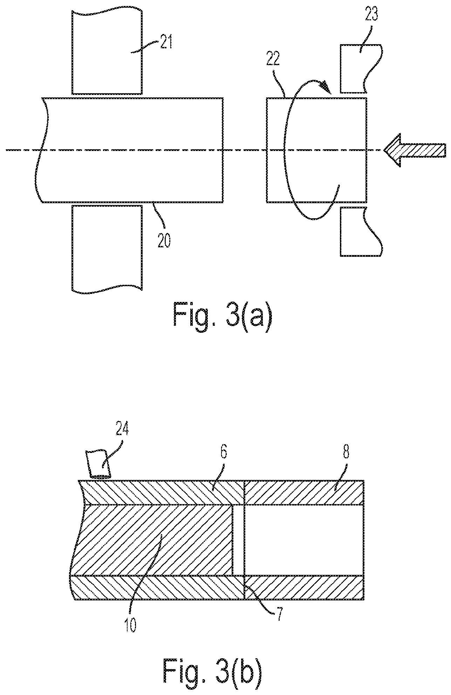

In formation of the hybrid insert, the stainless steel end part may be secured to the main body part 6 using a rotational friction welding technique as is now described with reference to Figure 3. Rotational friction welding requires that a first component is held stationary with respect to a second component spaced therefrom and rotating at high speed, and the components brought together whilst the drive of the rotating part is stopped. The resulting friction and localised heat thereby created causes the materials to bond together, with the rotating part rapidly slowing to rest as it becomes joined to the stationary part. More particularly, as shown in Figure 3(a) in the joining of the parts to form the insert 4 as described above, a cylindrical rod 20 of mild steel destined to form the main body part 6 is held stationary in a chuck 21 whilst a separate stainless steel rod 22 is held in a rotating chuck 23 rotating at high rotational speed. The stainless steel rod 22 is brought into contact with the mild steel part 20 as the rotational drive is disconnected, whereby the mild steel part 20 and stainless steel 22 part are joined through a rotational weld. Depending on the desired length of stainless steel portion, if this is particularly short, due to the difficulty in gripping a short length of stainless steel, it may be arranged that a longer section of stainless steel is provided, for example a 50mm length, and this then cut after welding. The composite rod of joined parts 20, 22 is then machined externally with tool 24 to produce a generally smooth exterior and to remove the excess material at the joint, and drilled and machined internally to provide the longitudinal opening with thread 10 and smooth interior to the stainless steel portion 8. It is recognised that the friction-welding is an effective way of forming the hybrid insert; indeed, the joint need not be hugely strong since the joint is not subjected to torsional loading, but rather to compressive loading.

Alternatively, other techniques for joining the main body part and stainless steel end part can be utilised. For example, the two parts may be formed with cooperating structures such as a splined coupling or upstands formed on one part received in openings or slots on the other.

## Claims

1. A blade insert (4) for a wind turbine blade root attachment for receiving a bolt within an internal thread of the insert, the insert comprising an elongate main body (6) formed of a first material for receipt within the blade root, **characterised in that** joined thereto is an annular end portion (8), in use disposed at a blade root end face and through which the bolt extends, formed of a second material which has higher corrosion resistance than said first material, said second material being stainless steel.

2. A blade insert according to claim 1 wherein said first material is mild steel.

3. A blade insert according to any preceding claim wherein the internal thread (10) is formed only in the main body portion (6) formed of the first material.

4. A blade insert according to claim 1 or 2 wherein the end portion (8) is joined to the elongate body (6) by a friction welding technique.

5. A blade insert according to any preceding claim wherein the end portion (8) has a length between 10mm and 60mm.

6. A wind turbine blade having a plurality of root inserts according to any preceding claim.

7. A method of forming a root insert for a wind turbine blade as defined in claim 1, comprising:
- providing a first stock part (20) of a first material for forming a main body (6) of the insert;
- providing a second stock part (22) of a second material which has higher corrosion resistance than the first material for forming an end portion (8) of the insert, said material being stainless steel;
- rotation welding the stock parts (20,22) together;
- machining the exterior to remove excess material;
- drilling and machining the interior to form a longitudinal opening having an internal thread (10).

## Patentansprüche

1. Blatteinsatz (4) für eine Windkraftanlageblattwurzelbefestigung zum Aufnehmen eines Bolzens in einem Innengewinde des Einsatzes, wobei der Einsatz einen länglichen Hauptkörper (6) umfasst, der aus einem ersten Material zur Aufnahme in der Blattwurzel gebildet ist, **dadurch gekennzeichnet, dass** damit verbunden ein ringförmiger Endabschnitt (8) ist, der in Verwendung an einer Blattwurzelstirnseite angeordnet ist und durch den sich der Bolzen erstreckt, der aus einem zweiten Material gebildet ist, das eine höhere Korrosionsbeständigkeit als das erste Material hat, wobei das zweite Material Edelstahl ist.

2. Blatteinsatz nach Anspruch 1, wobei das erste Material Baustahl ist.

3. Blatteinsatz nach einem der vorstehenden Ansprüche, wobei das Innengewinde (10) nur im Hauptkörperabschnitt (6) gebildet ist, der aus dem ersten Material gebildet ist.

4. Blatteinsatz nach Anspruch 1 oder 2, wobei der Endabschnitt (8) mit dem länglichen Körper (6) durch eine Reibschweißtechnik verbunden ist.

5. Blatteinsatz nach einem der vorstehenden Ansprüche, wobei der Endabschnitt (8) eine Länge zwischen 10 mm und 60 mm hat.

6. Windkraftanlageblatt mit einer Vielzahl von Wurzeleinsätzen nach einem der vorstehenden Ansprüche.

7. Verfahren zum Bilden eines Blatteinsatzes für ein Windkraftanlageblatt wie in Anspruch 1 definiert, umfassend:
- Bereitstellen eines ersten Bestandteils (20) aus einem ersten Material zum Bilden eines Hauptkörpers (6) des Einsatzes;
- Bereitstellen eines zweiten Bestandteils (22) aus einem zweiten Material, das eine höhere Korrosionsbeständigkeit als das erste Material hat, zum Bilden eines Endabschnitts (8) des Einsatzes, wobei das Material Edelstahl ist;
- Drehschweißen der Bestandteile (20, 22) aneinander;
- maschinell Bearbeiten der Außenseite zur Entfernung überschüssigen Materials;
- Bohren und maschinell Bearbeiten zur Bildung einer länglichen Öffnung mit einem Innengewinde (10).

## Revendications

1. Insert de pale (4) pour un attachement de pied de pale d'éolienne pour recevoir un boulon dans un fil interne de l'insert, l'insert comprenant un corps principal allongé (6) formé d'un premier matériau pour la réception dans le pied de pale, **caractérisé en ce que** joint à cela se trouve une partie d'extrémité annulaire (8), en utilisation disposé à un côté d'extrémité de pied de pale et à travers lequel le boulon s'étend, formé d'un deuxième matériau qui a une résistance à la corrosion supérieure audit premier matériau, ledit deuxième matériau étant de l'acier inoxydable.

2. Insert de pale selon la revendication 1, dans lequel ledit premier matériau est de l'acier doux.

3. Insert de pale selon l'une quelconque des revendications précédentes, dans lequel le fil interne (10) est formé uniquement dans la partie de corps principal (6) formée du premier matériau.

4. Insert de pale selon la revendication 1 ou 2, dans lequel la partie d'extrémité (8) est jointe au corps allongé (6) par une technique de soudage par friction.

5. Insert de pale selon l'une quelconque des revendications précédentes, dans lequel la partie d'extrémité (8) a une longueur entre 10 mm et 60 mm.

6. Pale d'éolienne ayant une pluralité d'inserts de pied selon l'une quelconque des revendications précédentes.

7. Procédé de formation d'un insert de pied pour une pale d'éolienne selon la revendication 1, comprenant :
- la fourniture d'une première partie de stock (20) d'un premier matériau pour former un corps principal (6) de l'insert ;
- la fourniture d'une deuxième partie de stock (22) d'un deuxième matériau qui a une résistance à la corrosion supérieure au premier matériau pour former une partie d'extrémité (8) de l'insert, ledit matériau étant de l'acier inoxydable ;
- le soudage en rotation des parties de stock (20, 22) ensemble ;
- l'usinage de l'extérieur pour enlever le matériau excédentaire ;
- le fraisage et l'usinage de l'intérieur pour former une ouverture longitudinale ayant un fil interne (10).
